# EUROPÄISCHE PATENTSCHRIFT

(11) **EP 0 447 811 B1**
(45) Veröffentlichungstag und Bekanntmachung des Hinweises auf die Patenterteilung: **26.08.1998**
(21) Anmeldenummer: 91102306.7
(22) Anmeldetag: 19.02.1991
(51) Int. Cl.: G01F 1/06, G01F 15/14

(54) **Strömungsanzeige- bzw. -messgerät**
Flow monitoring and measuring device
Dispositif d'affichage et de la mesure de débit

(30) Priorität: 11.09.1990 DE 4028780; 12.03.1990 US 492327
(43) Veröffentlichungstag der Anmeldung: 25.09.1991
(73) Patentinhaber: Kobold, Klaus, D-65779 Kelkheim (DE)
(72) Erfinder: Kobold, Klaus, D-65779 Kelkheim (DE)
(74) Vertreter: Keil, Rainer A., Dipl.-Phys. Dr.

(56) Entgegenhaltungen:
- DE-A- 3 733 862
- Prof.Dr.K.W.Bonfig: Technische Durchflussmessung unter besonderer Berücksichtigung neuartiger Durchflussmessverfahren, VULKAN-VERLAG, Essen, 1987, S.32-41

## Beschreibung

Die Erfindung bezieht sich auf ein Strömungsanzeige- oder Strömungsmeßgerät nach dem Oberbegriff von Anspruch 1.

Derartige Strömungsanzeige- bzw. Strömungsmeßgeräte sind an sich bekannt. Sie liefern entweder eine unmittelbare Strömungsanzeige dadurch, daß das sich bei Strömung drehende Flügelrad an den Enden der Flügel mit abwechselnd gepolten Magneten ausgerüstet ist, welche in einer ortsfesten Aufnahmespule Spannungsimpulse auslösen. Diese elektrischen Impulse können in einer elektronischen Schaltung verstärkt und gezählt werden, woraus sich die Durchflußmenge bzw. der Durchfluß ermitteln und an einer Anzeigetafel in Liter bzw. Liter/Minute mittels Leuchtdioden anzeigen läßt. Derartige Flügelrad-Strömungsanzeige- bzw. -meßgeräte haben bspw. gegenüber einigen Schwebekörper-Durchflußmessern den Vorteil eines nahezu viskositätsunabhängigen Anzeige- bzw. Meßergebnisses. Die bekannten Geräte dieser Art, wie bspw. das in der DE 37 33 862 Al gezeigte und beschriebene, sind jedoch jeweils nur für einen bestimmten Durchflußmengenbereich ausgelegt und müssen bei Änderung des Meßbereichs komplett ausgetauscht und/oder neu kalibriert werden, was mit Zeit- und Arbeitsaufwand verbunden ist und zudem eine Fehlerquelle darstellt und somit unter Umständen die Meßgenauigkeit negativ beeinflußt.

Hiervon ausgehend ist es Aufgabe der vorliegenden Erfindung, ein Strömungsanzeige- oder Strömungsmeßgerät der eingangs genannten Art so auszubilden, daß es ohne Kalibrierung mit gleich hoher Genauigkeit für mindestens einen weiteren Auswertbereich einsetzbar ist.

Diese Aufgabe wird erfindungsgemäß mit einem Gerät nach Anspruch 1 gelöst. Die Düsenscheibe ist damit auf einfache Weise gegen eine andere Düsenscheibe mit einem passenden Düsenbohrungsdurchmesser austauschbar, wodurch das Gerät auf unterschiedliche Meßbereiche mit hoher Meßgenauigkeit ausgelegt werden kann.

Eine besondere hohe Meßgenauigkeit für weitere Meßbereiche wird bei einer vorteilhaften Ausgestaltung der Erfindung dadurch erzielt, daß der Düsenbohrungsdurchmesser der Düsenscheiben in Abhängigkeit von dem Verhältnis V = R₁/D in feinen Stufen gestaffelt ist, wie im Kennzeichenteil von Anspruch 2 angegeben.

Bei den bekannten Geräten, welche mit Magneten wechselnder Polarität in den Flügeln des Flügelrades ausgestattet sind, ist eine gerade Anzahl von Flügeln erforderlich. Dies kann jedoch zu unerwünschten Resonanzen und Anlaufschwierigkeiten des Flügelrades führen. Die Resonanzen führen zu einer erheblichen Beanspruchung der Lagerung des Flügelrades, welche noch dadurch erhöht wird, daß die durch die Magneten bedingte träge Masse des Flügelrades in verhältnismäßig großem radialem Abstand von der Drehachse liegt. Bei einer vorteilhafte Weiterbildung der Erfindung ist daher vorgesehen, daß das Flügelrad eine ungerade Anzahl von Flügeln hat.

Um ferner den Strömungswiderstand des neuen Gerätes zu verringern. liegen die Mittelpunkte der Einlaßöffnung des Einlaßkanals der Strömungskammer und Auslaßöffnung des Auslaßkanals der Strömungskammer vorzugsweise in einem Umfangsabstand von nur etwa 180° oder weniger, vorzugsweise in einem Umfangsabstand zwischen 180° und 160°.

Dabei stehen bei einer weiteren Ausgestaltung der Erfindung Einlaßkanal und Auslaßkanal vorzugsweise mit auf einander gegenüberliegenden Stirnseiten des Strömungsgehäuses liegenden Gehäuseöffnungen in Strömungsverbindung.

Anlaufschwierigkeiten des Flügelrades können mit Sicherheit dann vermieden werden, wenn wenigstens der Einlaßkanal schräg zur Radialrichtung, vorzugsweise unter einem Winkel zwischen 10° und 80° zur Radialrichtung, in die Mantelfläche der Strömungskammer mündet. Dadurch wird nämlich trotz kompakter Bauweise gewährleistet, daß die Strömung mit Sicherheit mit einer Komponente senkrecht zu einem Flügel des Flügelrades auf diesen Flügel auftrifft.

Auch der Auslaßkanal kann schräg zur Radialrichtung, vorzugsweise unter einem Winkel zwischen 10° und 80° zur Radialrichtung, aus der Mantelfläche der Strömungskammer wegführen Bei einem so ausgestatteten Gerät kann das zu messende Fluid je nach den Platzverhältnissen entweder von der einen oder der anderen Seite aus durch die Strömungskammer geführt werden.

Um günstige Strömungsverhältnisse zu erzielen, wird weiterhin mit der Erfindung vorgeschlagen, die Gehäuseöffnungen für Einlaßkanal und/oder Auslaßkanal mittig in den einander gegenüberliegenden Stirnseiten des Strömungsgehäuses vorzusehen.

Dabei führt vorzugsweise die durch die Mittellängsachse der Düsenbohrung bestimmte Strömungsrichtung in der eingesetzten, z.B. eingeschraubten Lage der Düsenscheibe unabhängig von der Richtung des Einlaßkanals schräg zur Radialrichtung, vorzugsweise unter einem Winkel zwischen 10° und 80° zur Radialrichtung, in die (gedachte) Mantelfläche der Strömungskammer, so daß ein Anlaufen des Flügelrades stets sicher gewährleistet ist.

Es wird ferner vorgeschlagen, bei einer weiteren Ausgestaltung der Erfindung die Mittellängsachse des Einlaßkanals bzw. der Düsenbohrung auf die radial äußeren Endabschnitte der vorbeilaufenden Flügel des Flügelrades zu richten, um ein großes Drehmoment auf das Flügelrad auszuüben.

Radial innerhalb der radial äußeren Endabschnitte der Flügel können die Flügel des Flügelrades durchbrochen sein, wodurch die Masse des Flügelrades und der Widerstand beim Verdrehen innerhalb der gefüllten Strömungskammer verringert werden.

Die radial äußeren Endabschnitte der Flügel des Flügelrades haben einen möglichst geringen Abstand von jedenfalls unter einem Millimeter, vorzugsweise unter 0,5 mm von der Mantelfläche der Strömungskammer, so daß sie fast abdichten. Hierdurch wird die Zähl- bzw. Meßgenauigkeit wegen geringer Leckage erhöht.

Damit das Gerät nicht nur als Strömungsanzeige-, sondern auch als Strömungsmeßgerät eingesetzt werden kann, weist das Flügelrad eine Anzahl von im Unfangsabstand voneinander angeordneten Magneten, Ferritkernen od. dgl. impulsgebenden Elementen auf. Im Gegensatz zum Stand der Technik, bei welchen die Magnete an den radial äußeren Enden der Flügel vorgesehen sind, befinden sich erfindungsgemäß die impulsgebenden Elemente vorzugsweise in Nachbarschaft zur Achse des Flügelrades. Hierdurch wird das Trägheitsmoment des Flügelrades erheblich verringert. Die Lager werden dadurch weniger belastet. Außerdem sind die Magnete nicht in den Flügeln oder gar deren Enden vorgesehen, so daß trotz der ungeraden Anzahl von Flügeln eine gerade Anzahl von Magneten mit wechselnder Polarität für das Zusammenwirken mit einem ortsfesten Hall-Sensor oder von Ferritkernen für das Zusammenwirken mit einer ortsfesten Spule vorgesehen werden können.

Die impulsgebenden Elemente sind dabei vorzugsweise in einer Sektorscheibe zusammengefaßt, wobei in jedem Sektor ein impulsgebendes Element angeordnet ist.

Die Sektorscheibe kann ein Teil der Nabe des Flügelrades bzw. mit dieser drehfest verbunden sein.

Ferner ist es von Vorteil, wenn die impulsgebenden Elemente benachbart einer flachseitigen Seitenwand des Strömungsgehäuses angeordnet sind, nämlich benachbart derjenigen Seitenwand, hinter welcher der Hall-Sensor, die Spule oder ein Näherungssensor zur Erzeugung der elektrischen Impulse vorgesehen ist. Auf diese Weise erhält man verhältnismäßig große elektrische Impulse.

Das Flügelrad kann zwar auf einer drehfesten Achse angeordnet sein. Hierfür bedarf es jedoch einer hinreichenden Schmierung. Vorteilhafter ist es, wenn erfindungsgemäß das Flügelrad drehfest auf einer Welle aufgenommen ist, welche in den beiden einander gegenüberliegenden flachseitigen Seitenwänden des Strömungsgehäuses drehbar gelagert ist.

Die Lagerung für die Welle wird gemäß einem weiteren Erfindungsmerkmal von einem in einer Seitenwand axial festliegenden und einem in der anderen Seitenwand, vorzugsweise von außen, axial verstellbaren Lagerelement gebildet. Auf diese Weise ist eine schnelle und sichere Montage des Flügelrades bei langdauernder Funktionsfähigkeit gewährleistet.

Der einfachen Montage dient es auch, wenn wenigstens eine der flachseitigen Seitenwände des Strömungsgehäuses wenigstens teilweise von einem abnehmbar befestigten Gehäusedeckel gebildet ist, wie dies an sich bekannt ist.

Wenigstens eine der flachseitigen Seitenwände, die parallel zu dem Flügelrad liegen und vorzugsweise die Lagerelemente für das Flügelrad aufnehmen, bzw. wenigstens einer der Gehäusedeckel, welche die gleiche Lage und Funktion haben, besteht aus durchsichtigem Material, so daß das sich bei Vorliegen einer Störmung drehende Flügelrad von außen sichtbar ist und damit eine Strömungsanzeige ohne elektronische Schaltung gegeben wird. Sind beide Seitenwände bzw. Gehäusedeckel durchsichtig, kann von beiden Seiten aus optisch festgestellt werden, ob in der Leitung, in welche das Strömungsgehäuse eingeschaltet ist, eine Strömung herrscht oder nicht.

Eine zuverlässige Abdichtung des Strömungsgehäuses erhält man bei einfacher Montage dann, wenn die Gehäusedeckel mit einem Ansatz in eine Aussparung der Seitenwände hineinragen und dort mittels eines Dichtungsringes radial abgedichtet sind.

Das erfindungsgemäße Strömungsgehäuse kann Anschlußmuffen für den Einlaßkanal bzw. den Auslaßkanal aufweisen, die entweder einen Rohranschluß über Gewinde oder über Flansch zulassen. Um einen einfachen Einbau eines Rohranschlusses über Gewinde zuzulassen, sind die an ihrem äußeren Ende bspw. mit einem Innengewinde ausgestatteten Anschlußmuffen mit enem Muffenabschnitt mittels Dichtungsring in eine gewindelose Bohrung des Einlaßkanals bzw. Auslaßkanals dichtend eingesetzt und der Muffenabschnitt hat einen Einstich mit rundem Nutgrund, dem ein entsprechender von einem Abschnitt wenigstens einer von außen zugänglichen Gehäusebohrung gebildeter Einstich der gewindelosen Bohrung gegenüberliegt. In die jeweilige Gehäusebohrung ist dann ein z.B. als Gewindestift ausgebildeter Sicherungsstift eingesetzt. Auf diese Weise werden die Anschlußmuffen axial unverrückbar, jedoch drehbar an dem Strömungsgehäuse gehalten. wodurch auf einfache Weise eine Schraubverbindung zu der Anschlußleitung hergestellt werden kann. Auch während des Betriebes des Gerätes können die Anschlußmuffen relativ zu dem Strömungsgehäuse bewegt werden, ohne daß die Dichtigkeit der Anschlußmuffen beeinträchtigt wird. Hiermit wird ein weiterer konstruktiver und funktioneller Vorteil erreicht.

Um ein möglichst kompaktes Gerät zu erhalten, ist in weiterer Ausgestaltung das Strömungsgehäuse in einer Aussparung eines Gerätegehäuses eingepaßt, welches für die Aufnahme der elektronischen Schaltung bestimmt ist.

Die äußere Gestalt des Strömungsgehäuses ist dabei vorzugsweise im wesentlichen quaderförmig ausgebildet und in der in das Gerätegehäuse eingesetzten Lage des Strömungsgehäuses fluchten vorzugsweise die freiliegenden Außenflächen des Strömungsgehäuses mit den angrenzenden Außenflächen des Gerätegehäuses. Dadurch wird ein kompaktes Gesamtgerät mit ineinander übergehenden Außenflächen geschaffen. Soll lediglich eine Strömungsanzeige erfolgen. kann das Strömungsgehäuse mit Flügelrad und Anschlußmuffen selbständig verwendet werden. Soll das Gerät aber (auch) als Strömungsmeßgerät dienen, wird es somit in das Gerätegehäuse des Gesamtgehäuses integriert. Diese Integration ist auch nachträglich möglich, wenn von einer rein visuellen Anzeige einer Strömung eine Messung der Durchflußmenge bzw. des Durchflusses mittels der Magnete, Ferrite od. dgl. impulsgebenden Elemente und einer elektronischen Schaltung erfolgen und eine Anzeige über Leuchtdioden und/oder Digitalsignale erfolgen soll.

Bei der Integration des Strömungsgehäuses in das Gerätegehäuse wird insbesondere vorgeschlagen, daß die Außenfläche der einen flächenseitigen Seitenwand des Strömungsgehäuses mit der frontalen Außenfläche des Gerätegehäuses fluchtet. Die betreffende flächenseitige Seitenwand des Strömungsgehäuses bzw. der sie bildende Gehäusedeckel sind dabei vorzugsweise aus durchsichtigem Material, so daß das Gerät nicht nur zur Durchflußmengenmessung bzw. Durchflußmessung, sondern auch zur bloßen visuellen Strömungsanzeige verwendet werden kann.

Da die elektronische Schaltung Temperaturen über 100°c nicht ausgesetzt werden sollte, die zu messenden Fluide aber z.T. höhere Temperaturen haben können, wird bei einer Integration des Strömungsgehäuses in das Gerätegehäuse weiterhin vorgeschlagen, daß das Strömungsgehäuse in der in das Gerätegehäuse eingesetzten Lage gegen das Gerätegehäuse thermisch isoliert ist, bspw. durch Zwischenlage von thermisch isolierenden Platten.

Um das erfindungsgemäße Gerät einfach auf unterschiedliche Meßbereiche umstellen zu können, kann die frontale Außenfläche des Gerätegehäuses mit einer auswechselbaren Skalenfeldplatte ausgestattet sein.

Eine einfache Herstellung und Montage des Gerätes wird dadurch gewährleistet, daß das Gerätegehäuse als Abschnitt eines Stranghohlprofils ausgebildet ist.

Damit ein Überschreiten der maximalen Temperatur in den Gerätegehäuse möglichst verhindert wird, können die Außenflächen des Gerätegehäuses profiliert, z.B. mit Rippen oder Nuten ausgestaltet sein, welche in Strangprofillängsrichtung verlaufen, so daß die einzelnen Gerätegehäuse einfach von dem fortlaufenden Hohlprofilstrang abgeschnitten werden können.

Nachfolgend werden Ausführungsbeispiele der Erfindung anhand der Zeichnung näher erläutert.

Es zeigen:
- Fig. 1: eine Ausführungsform des erfindungsgemäßen Gerätes im Vertikalschnitt A-B von Fig. 3,
- Fig. 2: das Gerät gemäß Fig. 1 in einem Horizontalschnitt C-D von Fig. 3,
- Fig. 3: einen Vertikalschnitt E-F des erfindungsgemäßen Gerätes gemäß Fig. 2,
- Fig. 4: eine Schnittdarstellung entsprechend Fig. 1 einer anderen Ausführungsform eines erfindungsgemäßen Gerätes (Schnitt A-B von Fig. 6),
- Fig. 5: einen Horizontalschnitt C-D gemäß Fig. 6 des erfindungsgemäßen Gerätes von Fig. 4,
- Fig. 6: einen Vertikalschnitt C-D von Fig. 5 des erfindungsgemäßen Gerätes gemäß Fig. 4,
- Fig. 7: ein als Strömungsmeßgerät ausgebildetes Gerät im Vertikalschnitt A-B von Fig. 9,
- Fig. 8: einen Horizontalschnitt E-F von Fig. 9 des erfindungsgmäßen Gerätes gemäß Fig. 7,
- Fig. 9: einen Vertikalschnitt E-F von Fig. 8 des erfindungsgemäßen Gerätes von Fig. 7,
- Fig. 10: einen Vertikalschnitt A-B entsprechend Fig. 7 für eine andere Ausführungsform eines erfindunsgemäßen, als Strömungsmeßgerät ausgebildeten Gerätes,
- Fig. 11: einen Horizontalschnitt C-D von Fig. 12 eines erfindungsgemäßen Gerätes von Fig. 10,
- Fig. 12: einen Vertikalschnitt E-F von Fig. 11 eines erfindungsgemäßen Gerätes nach Fig. 10, und
- Fig. 13: eine Schrägansicht eines erfindungsgemäßen Strömungsanzeige- und - meßgerätes, bei welchem das Strömungsgehäuse in eine Aussparung des Geräteg ehäuses zur Schaffung eines Kompaktgerätes eingesetzt ist.

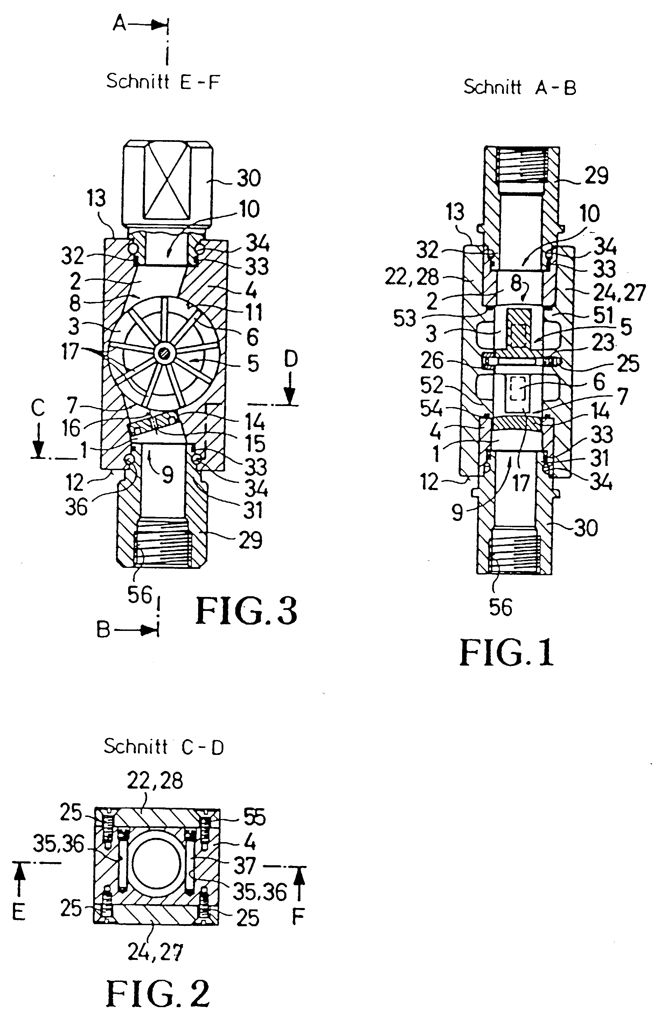

Die Fig. 1 - 3 veranschaulichen ein erfindungsgemäßes Strömungsanzeigegerät, bestehend aus einem Strömungsgehäuse 4 mit einer im wesentlichen kreiszylindrischen Strömungskammer 3, in welcher ein Flügelrad 5 drehbar gelagert ist. Die Strömungskammer 3 ist mit einem Einlaßkanal 1 und einem Auslaßkanal 2 ausgestattet. Die Mittelpunkte der Einlaßöffnung 7 des Einlaßkanals 1 der Strömungskammer 3 der und Auslaßöffnung 8 des Auslaßkanals 2 der Strömungskammer 3, liegen in einem Umfangsabstand voneinander, welcher kleiner als 180° ist. Einlaßkanal 1 und Auslaßkanal 2 stehen mit auf einander gegenüberliegenden Stirnseiten 12. 13 des Strömungsgehäuses 4 liegenden Gehäuseöffnungen 9, 10 in Strömungsverbindung. Die Gehäuseöffnungen 9, 10 für Einlaßkanal 1 und Auslaßkanal 2 liegen mittig in den einander gegenüberliegenden Stirnseiten 12, 13 des Strömungsgehäuses 4. Von der Gehäuseöffnung 9 führt der Einlaßkanal 1 schräg zur Radialrichtung mittels der Einlaßöffnung 7 in die Mantelfläche 11 des Strömungskanals 3. Der Auslaßkanal 2 führt schräg zur Radialrichtung von der Auslaßöffnung 8 aus der Mantelfläche 11 der Strömungskammer 3 weg. In den mit einem Innengewinde ausgestatteten Einlaßkanal 1 ist eine mit einem Außengewinde ausgestattete Düsenscheibe 14 eingeschraubt, welche eine Düsenbohrung 15 vorbestimmten Querschnitts aufweist. Die Düsenscheibe 14 hat außenseitig zwei Eingriffsöffnungen für ein Drehwerkzeug. Dabei ist die Mittellängsachse 16 der Düsenbohrung 15 wie die des Einlaßkanals 1 selbst auf die radial äußeren Endabschnitte 17 der an der Einlaßöffnung 7 vorbeilaufenden Flügel 6 des Flügelrades 5 gerichtet. Dabei können die Flügel 6 des Flügelrades 5, wie in Fig. 1 angedeutet, auch durchbrochen sein. Die radial äußeren Endabschnitte 17 der Flügel 6 des Flügelrades 5 halten einen möglichst geringen Abstand von der Mantelfläche 11 der Strömungskammer 3, so daß eine möglichst geringe Fluidleckage an der Mantelfläche 11 stattfindet.

Das Flügelrad 5 ist drehfest auf einer Welle 23 aufgenommen, welche in den beiden einander gegenüberliegenden flachseitigen Seitenwänden 22, 24 des Strömungsgehäuses 4 drehbar gelagert ist. Die Lagerung für die Welle 23 ist von einem in einer Seitenwand 22 axial festliegenden und einer in der anderen Seitenwand 24 von außen axial verstellbaren Lagerelement 25, 26 gebildet. Beide flachseitigen Seitenwände 22, 24 des Strömungsgehäuses 4 sind je von einem abnehmbar mittels Schrauben 55 befestigten Gehäusedeckel 27, 28 gebildet. Die Gehäusedeckel 27, 28 können aus durchsichtigem Material bestehen. Die Gehäusedeckel 27, 28 ragen mit einem Ansatz 51, 52, welche die Lagerelemente 25, 26 für die Welle 23 des Flügelrades 5 aufnehmen, in eine Aussparung der Seitenwände 22, 24 hinein. Dort sind die Ansätze 51, 52 mittels eines Dichtungsringes 53, 54 radial gegen das Strömungsgehäuse 4 abgedichtet.

Einlaßkanal 1 und Auslaßkanal 2 sind mit Anschlußmuffen 29, 30 versehen. Die Anschlußmuffen 29, 30 sind mit einem Muffenabschnitt 31, 32 mittels Dichtungsring 33 in eine gewindelose Bohrung des Einlaßkanals 1 bzw. Auslaßkanals 2 dichtend eingesetzt. Der jeweilige Muffenabschnitt 31, 32 weist einen Einstich 34 mit rundem Nutgrund auf, dem zwei entsprechende, von je einem Abschnitt zweier von außen zugänglichen Gehäusebohrungen 35 gebildete Einstiche 36 der gewindelosen Bohrung des Einlaßkanals 1 bzw. des Auslaßkanals 2 gegenüberliegt. In die Gehäusebohrungen 35 ist je ein als Gewindestift ausgebildeter Sicherungsstift 37 eingesetzt. Auf diese Weise sind die Anschlußmuffen 29, 30 axial festgelegt, jedoch gegenüber dem Strömungsgehäuse 4 drehbar.

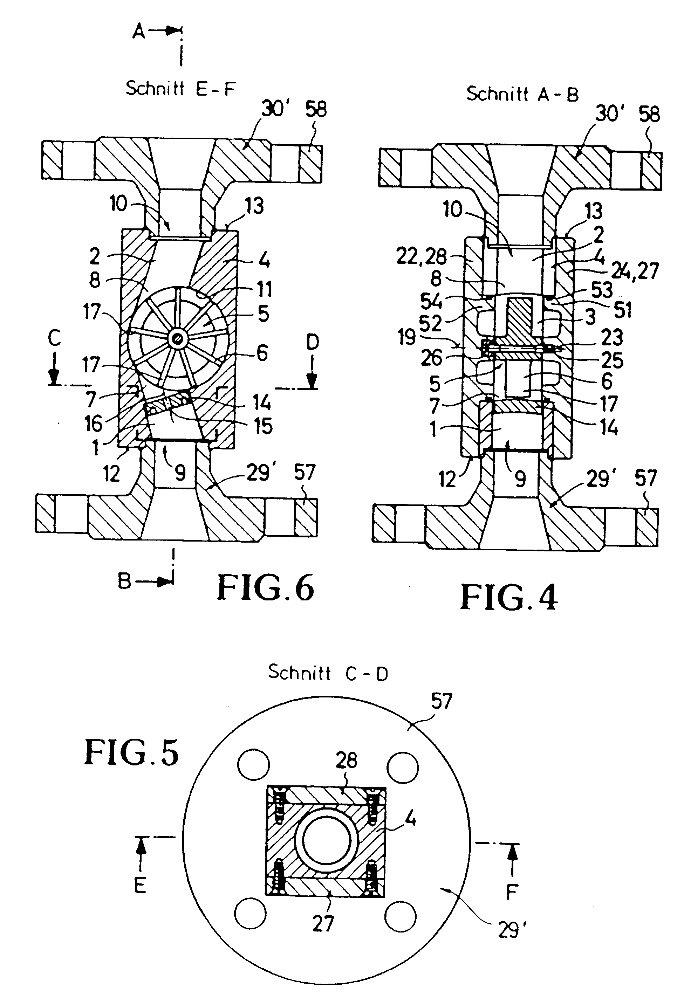

Das erfindungsgemäße Strömungsanzeigegerät gemäß Fig. 4 - 6 unterscheidet sich von dem in den Fig. 1 - 3 im wesentlichen nur dadurch, daß die Anschlußmuffen 29', 30' für Einlaßkanal 1 und Auslaßkanal 2 kein Innengewinde 56 für eine Rohrverschraubung aufweisen, sondern einen Flansch 57, 58 für eine Flanschverbindung. Außerdem sind die Anschlußmuffen 29', 30' in diesem Fall mit dem Strömungsgehäuse 4 verschweißt.

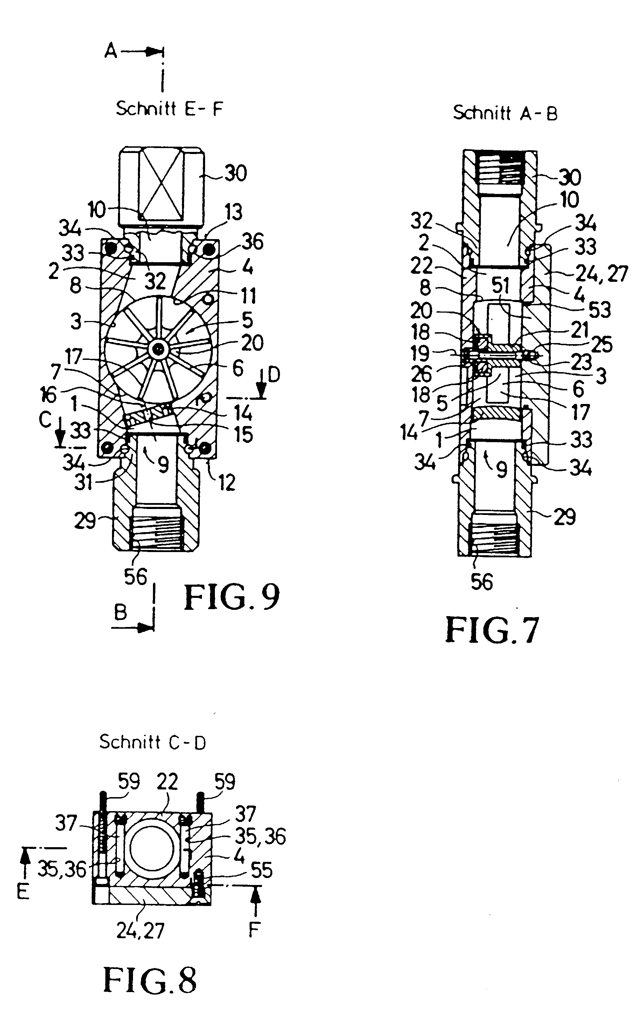

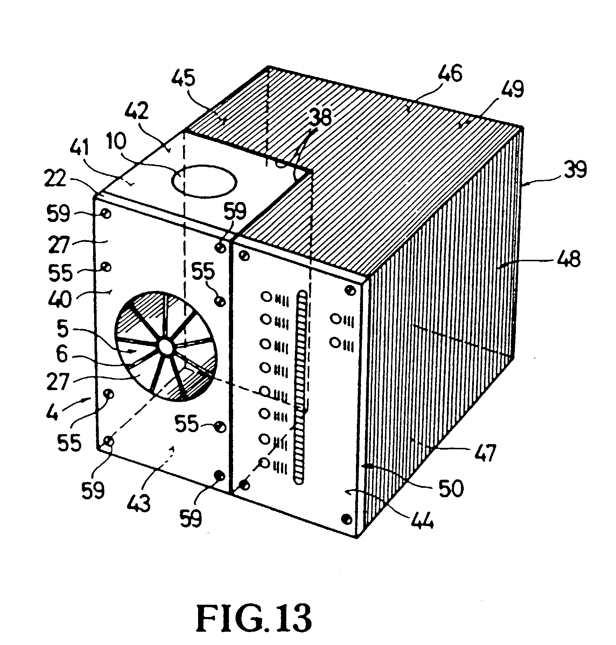

Die Ausführungsform des Gerätes gemäß den Fig. 7 - 9 ähnelt derjenigen aus den Fig. 1 - 3. In den Fig. 7 - 9 ist das Gerät jedoch als Durchflußmeßgerät ausgestattet, welches nicht nur eine optische Strömungsanzeige aufgrund des durchsichtigen Materials des einen Gehäusedeckels 27 bietet (ein Gehäusedeckel 28 fehlt hier), sondern auch noch eine elektrische Meßanzeige für die Durchflußmenge bzw. den Durchf!uß. Zu diesem Zweck weist das Flügelrad 5 eine Anzahl von im Umfangsabstand voneinander angeordneten Magneten, Ferritkernen od. dgl. impulsgebenden Elementen 18 auf, welche in unmittelbarer Nachbarschaft zur Achse 19 des Flügelrades 5 in einer z.B. aus Kunststoff bestehenden Sektorscheibe 20 zusammengefaßt und eingeschlossen sind, wobei in jedem Sektor ein impulsgebendes Element 18 angeordnet ist. Die Sektorscheibe 20 bildet einen Teil der Nabe 21 des Flügelrades 5 Die impulsgebenden Elemente 18 sind unmittelbar benachbart der flachseitigen Seitenwand 22 des Strömungsgehäuses 4 angeordnet, an dessen Außenseite sich ein nicht dargestellter Hall-Generator, eine nicht dargestellte Spule oder ein nicht dargestelles Näherungsschaltelement für die Erzeugung eines elektrischen Spannungs- oder Stromsignals angeordnet ist. Das Strömungsgehäuse 4 kann, wie aus den Fig. 8 und 13 ersichtlich, mittels Schrauben 59 in der Aussparung 38 eines Gerätegehäuses 39 festgelegt sein.

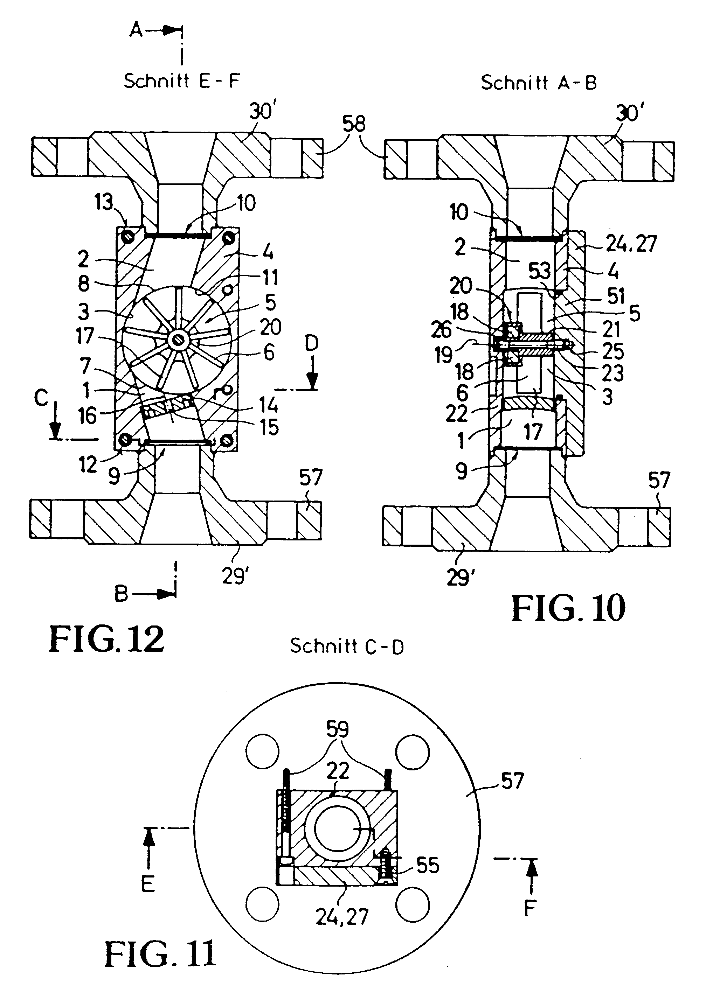

Die Ausführungsform eines erfindungsgemäßen Gerätes gemäß den Fig. 10 - 12 entspricht im wesentlichen derjenigen nach den Fig. 7 - 9. Hierbei sind jedoch wieder die für eine Gewindeverbindung vorgesehenen Anschlußmuffen 29, 30 durch Anschlußmuffen 29' und 30' mit Flanschen ersetzt, die mit dem Strömungsgehäuse 4 verschweißt sind, ähnlich der Ausführungsform der Fig. 4 - 6. Im übrigen ist der Aufbau identisch.

Fig. 13 zeigt in Schrägansicht ein Gesamtgerät mit Strömungsge häuse 4, welches in die Aussparung 38 des Gerätegehäuses 39 eingepaßt und mit diesem zu einer kompakten Gesamtform integriert ist. Die Anschlußmuffen 29, 30 bzw. 29', 30' sind nicht dargestellt. Der Gehäusedeckel 27 besteht aus durchsichtigem Material, so daß das Gerät sowohl als Strömungsanzeigegerät als auch als Strömungsmeßgerät eingesetzt werden kann mit Hilfe der elektronischen Schaltung, die in dem Gerätegehäuse 39 untergebracht ist. Die Aussparung 38 des Gerätegehäuses 39 ist entsprechend der Außenform des Strömungsgehäuses 4 quaderförmig derart ausgebildet, daß die freiliegenden Außenflächen 40 - 43 des Strömungsgehäuses 4 mit den angrenzenden Außenflächen 44 - 47 des Gerätegehäuses 39 fluchten. Die Außenfläche 40 der einen flachseitigen Seitenwand 22 des Strömungsgehäuses 4 fluchtet insbesondere mit der frontalen Außenfläche 44 des Gerätegehäuses 39. Das Strömungsgehäuse 4 ist ferner gegenüber dem Gerätegehäuse 39 thermisch isoliert, indem wärmeisolierende Platten zwischen das Strömungsgehäuse 4 und das Gerätegehäuse 39 gelegt sind. Die frontale Außenfläche 44 des Gerätegehäuses 39 ist mit einer auswechselbaren Skalenfeldplatte 50 ausgestattet, von welcher aus die analoge oder digitale Anzeige der Durchflußmenge bzw. des Durchflusses z.B. mittels Leuchtdioden erfolgt. Hierbei können bspw. auch Zusatzfunktionen, wie Erreichen bzw. Überschreiten eines vorgegebenen Grenzwertes, der Betriebszustand (Ein/Aus) des Gerätes, der Signalbereich (in mA) angezeigt werden, sowie Betätigungsorgane für die Einstellung des Meßbereiches u. dgl. vorgesehen sein.

Das Gerätegehäuse 39 ist als Abschnitt eines Stranghohlprofils ausgebildet und seine Außenflächen 40 - 49 sind profiliert, z.B. mit Rippen oder Nuten, welche in Hohlprofilstranglängsrichtung verlaufen.

### Bezugszeichenliste:

- 1: Einlaßkanal
- 2: Auslaßkanal
- 3: Strömungskammer
- 4: Strömungsgehäuse
- 5: Flügelrad
- 6: Flügel
- 7: Einlaßöffnung
- 8: Auslaßöffnung
- 9: Gehäuseöffnung
- 10: Gehäuseöffnung
- 11: Mantelfläche
- 12: Stirnseite
- 13: Stirnseite
- 14: Düsenscheibe
- 15: Düsenbohrung
- 16: Mittellängsachse
- 17: Endabschnitte
- 18: inpulsgebende Elemente
- 19: Achse
- 20: Sektorscheibe
- 21: Nabe
- 22: Seitenwand
- 23: Welle
- 24: Seitenwand
- 25: Lagerelement
- 26: Lagerelement
- 27: Gehäusedeckel
- 28: Gehäusedeckel
- 29, 29': Anschlußmuffen
- 30, 30': Anschlußmuffen
- 31: Muffenabschnitt
- 32: Muffenabschnitt
- 33: Dichtungsring
- 34: Einstich
- 35: Gehäusebohrung
- 36: Einstich
- 37: Sicherungsstift
- 38: Aussparung
- 39: Gerätegehäuse
- 40: Außenfläche
- 41: Außenfläche
- 42: Außenfläche
- 43: Außenfläche
- 44: Außenfläche
- 45: Außenfläche
- 46: Außenfläche
- 47: Außenfläche
- 48: Außenfläche
- 49: Außenfläche
- 50: Skalenfeldplatte
- 51: Ansatz
- 52: Ansatz
- 53: Dichtungsring
- 54: Dichtungsring
- 55: Schrauben
- 56: Innengewinde
- 57: Flansch
- 58: Flansch
- 59: Schrauben

## Patentansprüche

1. Strömungsanzeige- oder Strömungsmeßgerät mit einem in einer im wesentlichen kreiszylindrischen, einen Einlaßkanal (1) und einen Auslaßkanal (2) aufweisenden Strömungskammer (3) eines Strömungsgehäuses (4) drehbar gelagerten Flügelrad (5), und mit gegeneinander austauschbaren Düsenscheiben (14), von welchen eine in dem Einlaßkanal (1) (2) mit einer Düsenbohrung oder - mündung (15) vorbestimmten Querschnitts eingesetzt und zur Einstellung eines anderen Auswertbereichs, d.h. Anzeige- oder Meßbereichs, gegen eine andere der Düsenscheiben (14) mit einem anderen vorbestimmten Querschnitt der Düsenbohrung oder -mündung (15) austauschbar gehalten ist, **dadurch gekennzeichnet,** daß der Durchmesser D in mm der Düsenbohrung oder -mündung (15) der anderen Düsenscheibe (14) derart ist, daß das Verhältnis V = R₁/D, wobei R₁ in Liter Wasser/Min. die Strömung ist, welche die untere Grenze des jeweiligen Auswertbereichs darstellt, mit Zunahme des Durchmessers D zunimmt, d.h., daß die untere Grenze R₁ als Funktion des Durchmessers D stärker zunimmt als der Durchmesser D selbst, wobei das Verhältnis, wenn der Durchmesser D etwa 1,25 mm und R₁ etwa 0,09 Liter Wasser/Min. beträgt, einen Wert von 0,075 Liter Wasser/Min. x mm und, wenn der Durchmesser D etwa 20 mm und R₁ etwa 6 Liter Wasser/Min. beträgt, einen Wert von etwa 0,3 Liter Wasser/Min. x mm hat.

2. Gerät nach Anspruch 1, **dadurch gekennzeichnet,** daß der Durchmesser D in Abhängigkeit von der unteren Grenze R₁ des Meßbereichs derart festlegbar ist, daß zwischen dem Durchmesser D und dem Verhältnis V für gegeneinander austauschbare Düsenscheiben folgende Beziehung besteht:
| R₁(Liter Wasser/Min.) | D (mm) | V (Liter Wasser/mm. Min.) |
|---|---|---|
| ∼0,09 | 1,25 | ∼0,075 |
| ∼0,17 | 1,90 | ∼0,090 |
| ∼0,38 | 2,55 | ∼0,15 |
| ∼1,52 | 7,60 | ∼0,20 |
| ∼2,79 | 12,70 | ∼0,22 |
| ∼3,81 | 15,25 | ∼0,25 |
| ∼5,72 | 19,05 | ∼0.30. |

3. Gerät nach Anspruch 1 oder 2, dadurch gekennzeichnet, daß das Flügelrad (5) eine ungerade Anzahl von Fügeln (6) hat.

4. Gerät nach einem der Ansprüche 1 bis 3, dadurch gekennzeichnet, daß die Mittelpunkte der Einlaßöffnung (7) des Einlaßkanals (1) der Strömungskammer (3) und der Auslaßöffnung (8) des Auslaßkanals (2) der Strömungskammer (3) in einem Umfangsabstand von etwa 180° oder weniger, vorzugsweise in einem Umfangsabstand zwischen 180° und 160° liegen.

5. Gerät nach einem der Ansprüche 1 bis 4, dadurch gekennzeichnet, daß Einlaßkanal (1) und Auslaßkanal (2) mit auf einander gegenüberliegenden Stirnseiten (12, 13) des Strömungsgehäuses (4) liegenden Gehäuseöffnungen (9, 10) in Strömungsverbindung stehen.

6. Gerät nach einem der Ansprüche 1 bis 5, dadurch gekennzeichnet, daß wenigstens der Einlaßkanal (1) schräg zur Radialrichtung, vorzugsweise unter einem Winkel zwischen 10 und 80° zur Radialrichtung, in die Mantelfläche (11) der Strömungskammer (3) mündet.

7. Gerät nach einem der Ansprüche 1 bis 6, dadurch gekennzeichnet, daß der Auslaßkanal (2) schräg zur Radialrichtung, vorzugsweise unter einem Winkel zwischen 10° und 80° zur Radialrichtung, aus der Mantelfläche (11) der Strömungskammer (3) wegführt.

8. Gerät nach einem der Ansprüche 1 bis 7, dadurch gekennzeichnet, daß die Gehäuseöffnungen (9, 10) für Einlaßkanal (1) und/oder Auslaßkanal (2) mittig in den einander gegenüberliegenden Stirnseiten (12, 13) des Strömungsgehäuses (4) liegen.

9. Gerät nach einem der Ansprüche 1 bis 8, dadurch gekennzeichnet, daß die durch die Mittellängsachse (16) der Düsenbohrung (15) bestimmte Strömungsrichtung in der eingesetzten, z.B. eingeschraubten Lage der Düsenscheibe (14) schräg zur Radialrichtung, vorzugsweise unter einem Winkel zwischen 10° und 80° zur Radialrichtung in die (gedachte) Mantelfläche (11) der Strömungskammer (3) führt.

10. Gerät nach einem der Ansprüche 1 bis 9, dadurch gekennzeichnet, daß die Mittellängsachse (16) des Einlaßkanals (1) bzw. der Düsenbohrung (15) auf die radial äußeren Endabschnitte (17) der vorbeilaufenden Flügel (6) des Flügelrades (5) gerichtet ist.

11. Gerät nach einem der Ansprüche 1 bis 10, dadurch gekennzeichnet, daß die Flügel (6) des Flügelrades (5) durchbrochen sind.

12. Gerät nach einem der Ansprüche 1 bis 11, dadurch gekennzeichnet, daß die radial äußeren Endabschnitte (17) der Flügel (6) des Flügelrades (5) einen geringen Abstand von jedenfalls unter einem Millimeter, vorzugsweise unter 0,5 mm von der Mantelfläche (11) der Strömungskammer (3) halten.

13. Gerät nach einem der Ansprüche 1 bis 12. dadurch gekennzeichnet, daß das Flügelrad (5) eine Anzahl von im Umfangsabstand voneinander angeordneten Magneten, Ferritkernen od. dgl. impulsgebenden Elementen (18) aufweist.

14. Gerät nach Anspruch 13, dadurch gekennzeichnet, daß die impulsgebenden Elemente (18) in Nachbarschaft zur Achse (19) des Flügelrades (5) angeordnet sind.

15. Gerät nach Anspruch 13 oder 14, dadurch gekennzeichnet, daß die impulsgebenden Elemente (18) in einer Sektorscheibe (20) zusammengefaßt sind, wobei in jedem Sektor ein impulsgebendes Element (18) angeordnet ist.

16. Gerät nach Anspruch 15, dadurch gekennzeichnet, daß die Sektorscheibe (20) einen Teil der Nabe (21) des Flügelrades (5) bildet bzw. mit dieser drehfest verbunden ist.

17. Gerät nach einem der Ansprüche 13 bis 16, dadurch gekennzeichnet, daß die impulsgebenden Elemente (18) benachbart einer flachseitigen Seitenwand (12) des Strömungsgehäuses (4) angeordnet sind.

18. Gerät nach einem der Ansprüche 1 bis 17, dadurch gekennzeichnet, daß das Flügelrad (5) drehfest auf einer Welle (21) aufgenommen ist, welche in den beiden einander gegenüberliegenden flachseitigen Seitenwänden (22, 24) des Strömungsgehäuses (4) drehbar gelagert ist.

19. Gerät nach Anspruch 18, dadurch gekennzeichnet, daß die Lagerung für die Welle (23) von einem in einer Seitenwand (22) axial festliegenden und einem in der anderen Seitenwand (24), vorzugsweise von außen, axial verstellbaren Lagerelement (25, 26) gebildet ist.

20. Gerät nach einem der Ansprüche 1 bis 19, dadurch gekennzeichnet, daß wenigstens eine der flachseitigen Seitenwände (22, 24) des Strömungsgehäuses (4) wenigstens teilweise von einem abnehmbar befestigten Gehäusedeckel (27, 28) gebildet ist.

21. Gerät nach einem der Ansprüche 1 bis 20, dadurch gekennzeichnet, daß wenigstens eine der flachseitigen Seitenwände (22, 24) bzw. wenigstens eine der Gehäusedeckel (27, 28) aus durchsichtigem Material besteht.

22. Gerät nach Anspruch 20 oder 21, dadurch gekennzeichnet, daß die Gehäusedeckel (27, 28) mit einem Ansatz (51, 52) in eine Aussparung der Seitenwände (22, 24) hineinragen und dort mittels eines Dichtungsringes (53, 54) radial abgedichtet sind.

23. Gerät nach einem der Ansprüche 1 bis 22, mit Anschlußmuffen (29, 30) für den Einlaßkanal (1) bzw. den Auslaßkanal (2), dadurch gekennzeichnet, daß die Anschlußmuffen (29, 30) mit einem Muffenabschnitt (31, 32) mittels Dichtungsring (33) in eine gewindelose Bohrung des Einlaßkanals (1) bzw. Auslaßkanals (2) dichtend eingesetzt sind, und daß der Muffenabschnitt (31, 32) einen Einstich (34) mit rundem Nutgrund aufweist, dem ein entsprechender, von einem Abschnitt wenigstens einer von außen zugänglichen Gehäusebohrung (35) gebildeter Einstich (36) der gewindelosen Bohrung gegenüberliegt, und daß in die jeweilige Gehäusebohrung (35) ein z.B. als Gewindestift ausgebildeter Sicherungsstift (37) eingesetzt ist.

24. Gerät nach einem der Ansprüche 1 bis 23, dadurch gekennzeichnet, daß das Strömungsgehäuse (4) in eine Aussparung (38) eines Gerätegehäuses (39) eingepaßt ist.

25. Gerät nach Anspruch 24, dadurch gekennzeichnet, daß die äußere Gestalt des Strömungsgehäuses (4) im wesentlichen quaderförmig ausgebildet ist und in der in das Gerätegehäuse (39) eingesetzten Lage des Strömungsgehäuses (4) die freiliegenden außenflächen (40 - 43) des Strömungsgehäuses (4) mit den angrenzenden Außenflächen (44 - 47) des Gerätegehäuses (39) fluchten.

26. Gerät nach Anspruch 24 oder 25. dadurch gekennzeichnet, daß die Außenfläche (40) der einen flachseitigen Seitenwand (22) des Strömungsgehäuses (4) mit der frontalen Außenfläche (44) des Gerätegehäuses (39) fluchtet.

27. Gerät nach einem der Ansprüche 24 bis 26, dadurch gekennzeichnet, daß das Strömungsgehäuse (4) in der in das Gerätegehäuse (39) eingesetzten Lage gegen das Gerätegehäuse (39) thermisch isoliert ist.

28. Gerät nach einem der Ansprüche 24 bis 27, dadurch gekennzeichnet, daß die frontale Außenfläche (44) des Gerätegehäuses (39) mit einer auswechselbaren Skalenfeldplatte (50) ausgestattet ist.

29. Gerät nach einem der Ansprüche 24 bis 28, dadurch gekennzeichnet, daß das Gerätegehäuse (39) als Abschnitt eines Stranghohlprofils ausgebildet ist.

30. Gerät nach einem der Ansprüche 24 bis 29, dadurch gekennzeichnet, daß die Außenflächen (40 - 49) des Gerätegehäuses (39) profiliert, z.B. mit Rippen oder Nuten ausgestattet sind.

## Claims

1. Flow monitoring and measuring device with a impeller (5) mounted rotatably in a flow chamber (3) of a flow housing (4), where the said chamber has an essentially circular cylindrical shape with an inlet duct (1) and an outlet duct (2), and with interchangeable nozzle plates (14), one of which with a nozzle bore or opening (15) of predetermined cross section is inserted in the inlet duct (1) and to set another evaluation range, i.e. monitoring or measurement range, is held replaceably against a second nozzle plate (14) with a second predetermined cross section of nozzle bore or opening (15), characterised in that the diameter D in mm of the nozzle bore or opening (15) of the second nozzle plate (14) is such that ratio V = R₁/D, where R₁ in litres water/min is the flow which represents the lower limit of the evaluation range concerned, increases with the increase in diameter D, i.e. the lower limit R₁ as a function of diameter D increases more strongly than the diameter D itself, where if the diameter D is approximately 1.25 mm and R₁ approximately 0.09 litres water/min, the ratio has a value of 0.075 litres water/min x mm and if diameter D is approximately 20 mm and R₁ approximately 6 litres water/min, a value of approximately 0.3 litres water/min x mm.

2. Device according to claim 1, characterised in that the diameter D can be set as a function of the lower limit R₁ of the measurement range such that the following ratio exists between diameter D and ratio V for interchangeable nozzle plates:
| R₁ (litres water/min) | D (mm) | V (litres water/mm min) |
|---|---|---|
| ^{∼}0.09 | 1.25 | ^{∼}0.075 |
| ^{∼}0.17 | 1.90 | ^{∼} 0.090 |
| ^{∼}0.38 | 2.55 | ^{∼}0.15 |
| ^{∼}1.52 | 7.60 | ^{∼} 0.20 |
| ^{∼} 2.79 | 12.70 | ^{∼}0.22 |
| ^{∼} 3.81 | 15.25 | ^{∼} 0.25 |
| ^{∼} 5.72 | 19.05 | ^{∼}0.30 |

3. Device according to claim 1 or 2, characterised in the impeller (5) has an odd number of vanes (6).

4. Device according to any of claims 1 to 3, characterised in that the centre point of the inlet opening (7) of the inlet duct (1) of the flow chamber (3) and the outlet opening (8) of the outlet duct (2) of the flow chamber (3) lie at a peripheral interval of approximately 180° or less, preferably at a peripheral interval of between 180° and 160°.

5. Device according to any of claims 1 to 4, characterised in that the inlet channel (1) and the outlet channel (2) have a flow connection with housing openings (9, 10) lying on opposite faces (12, 13) of the flow housing (4).

6. Device according to any of claims 1 to 5, characterised in that at least the inlet duct (1) opens obliquely to the radial direction, preferably at an angle of between 10° and 80° to the radial direction, in the generated surface (11) of the flow chamber (3).

7. Device according to any of claims 1 to 6, characterised in that the outlet duct (2) runs obliquely to the radial direction, preferably at an angle of between 10° and 80° to the radial direction, away from the generated surface (11) of the flow chamber (3).

8. Device according to any of claims 1 to 7, characterised in that the housing openings (9, 10) for the inlet duct (1) and/or outlet duct (2) lie centrally in the opposite faces (12, 13) of the flow housing (4).

9. Device according to any of claims 1 to 8, characterised in that the flow direction determined by the central longitudinal axis (16) of the nozzle bore (15), when the nozzle plate (14) is inserted e.g. screwed in, runs oblique to the radial direction, preferably at an angle of between 10° and 80° to the radial direction in the (theoretical) generated surface (11) of the flow chamber (3).

10. Device according to any of claims 1 to 9, characterised in that the centre longitudinal axis (16) of the inlet duct (1) or the nozzle bore (15) is aligned to the radial outer end sections (17) of the passing vane (6) of the impeller (5).

11. Device according to any of claims 1 to 10, characterised in that the vanes (6) of the impeller (5) are perforated.

12. Device according to any of claims 1 to 11, characterised in that the radial outer end sections (17) of the vane (6) of the impeller (5) have a small distance, in any case less than 1 mm, preferably less than 0.5 mm, from the generated surface (11) of the flow chamber (3).

13. Device according to any of claims 1 to 12, characterised-in that the impeller (5) has a number of magnets, ferrite cores or similar pulse-emitting elements arranged at peripheral intervals.

14. Device according to claim 13, characterised in that the pulse-emitting elements (18) are arranged adjacent to the axis (19) of the impeller (5).

15. Device according to claim 13 or 14, characterised in that the pulse-emitting elements (18) are combined in a sector plate (20), where one pulse-emitting element (18) is arranged in each sector.

16. Device according to claim 15, characterised in that the sector plate (20) forms part of the hub (21) of the impeller (5) or is rotationally firmly connected to this.

17. Device according to any of claims 13 to 16, characterised in that the pulse-emitting elements (18) are arranged adjacent to a flat side wall (12) of the flow housing (4).

18. Device according to any of claims 1 to 17, characterised in that the impeller (5) is held rotationally firmly on a shaft (21) which is mounted rotatably in the two opposing flat side walls (22, 24) of the flow housing (4).

19. Device according to claim 18, characterised in that the bearing for the shaft (23) is formed by a bearing element (25, 26) placed axially fixed in a side wall (22) and axially adjustable preferably from the outside, in another side wall (24).

20. Device according to any of claims 1 to 19, characterised in that at least one of the flat side walls (22, 24) of the flow housing (4) is formed at least partly by a removably attached housing cover (27, 28).

21. Device according to any of claims 1 to 20, characterised in that at least one of the flat side walls (22, 24) or at least one of the housing covers (27, 28) is made of transparent material.

22. Device according to claim 20 or 21, characterised in that the housing covers (27, 28) project with an attachment (51, 52) in a recess of the side wall (22, 24) and are there sealed radially by means of a sealing ring (53, 54).

23. Device according to any of claims 1 to 22, with connecting sleeves (29, 30) for the inlet duct (1) and the outlet duct (2) characterised in that the connecting sleeves (29, 30) are inserted with a sleeve section (31, 32) in an unthreaded bore of the inlet duct (1) or the outlet duct (2) and sealed by means of a sealing ring (33) and that the sleeve section (31, 32) has a notch (34) with a round groove base which lies opposite a corresponding notch (36) in the unthreaded bore formed by a section of at least one housing bore (35) accessible from the outside, and that a locking pin (37) formed for example as a threaded pin is inserted in the housing bore (35) concerned.

24. Device according to any of claims 1 to 23, characterised in that the flow housing (4) is fitted in a recess (38) of a device housing (39).

25. Device according to claim 24, characterised in that the outer shape of the flow housing (4) is essentially cuboid and when the flow housing (4) is inserted in the device housing (39), the exposed outer surfaces (40 - 43) of the flow housing (4) are aligned with the adjacent outer surfaces (44 - 47) of the device housing (39).

26. Device according to claim 24 or 25, characterised in that the outer surface (40) of one flat side wall (22) of the flow housing (4) is aligned with the front outer surface (44) of the device housing (39).

27. Device according to any of claims 24 to 26, characterised in that the flow housing (4), when inserted in the device housing (39), is thermally insulated from the device housing (39).

28. Device according to any of claims 24 to 27, characterised in that the front outer surface (44) of the device housing (39) is fitted with a replaceable scale field plate (50).

29. Device according to any of claims 24 to 28, characterised in that the device housing (39) is formed as section of the hollow extrusion profile.

30. Device according to any of claims 24 to 29, characterised in that the outer surfaces (40 - 49) of the device housing (39) are profiled, e.g. fitted with ribs or grooves.

## Revendications

1. Appareil d'affichage ou de mesure de débit comportant une roue à aubes (5) qui est montée tournante dans une chambre d'écoulement (3) essentiellement cylindrique-circulaire, pourvue d'un conduit d'entrée (1) et d'un conduit de sortie (2) d'un carter (4), ainsi que des buses-disques (14) interchangeables, parmi lesquelles une buse-disque munie d'un orifice de buse ou d'une embouchure (15) de section prédéterminée est montée dans le conduite d'entrée (1) et est fixée de manière à pouvoir être remplacée par une buse parmi les autres buses-disques (14) avec un orifice de buse ou une embouchure de section prédéterminée différente, aux fins de régler une plage de travail, c'est-à-dire une plage d'affichage ou de mesure, différente, caractérisé par le fait que le diamètre D en mm de l'orifice de buse ou de l'embouchure (15) de l'autre buse-disque (14) est tel que le rapport V = R₁/D, R₁ étant le débit en litres d'eau/min qui représente la limite inférieure de la plage de travail concernée, augmente en fonction du diamètre D, c'est-à-dire que la limite inférieure R₁, en tant que fonction du diamètre D, augmente plus rapidement que le diamètre D, le rapport ayant une valeur de 0,075 litre d'eau/min lorsque D est d'environ 1,25 mm et R₁ d'environ 0,09 litre d'eau/min et une valeur d'environ 0,3 litre d'eau/min lorsque D est d'environ 20 mm et R₁ d'environ 6 litres d'eau/min.

2. Appareil selon la revendication 1, caractérisé par le fait que le diamètre D peut être fixé en fonction de la limite intérieure R₁ de la plage de mesure, de telle sorte que l'on ait entre le diamètre D et le rapport V, pour des buses interchangeables, la relation suivante:
| R₁ (litres d'eau/min) | D (mm) | V (litres d'eau/min) |
|---|---|---|
| ∼0,09 | 1,25 | ∼0,075 |
| ∼0,17 | 1,90 | ∼0,090 |
| ∼0,38 | 2,55 | ∼0,15 |
| ∼1,52 | 7,60 | ∼0,20 |
| ∼2,79 | 12,70 | ∼0,22 |
| ∼3,81 | 15,25 | ∼0,25 |
| ∼5,72 | 19,05 | ∼0,30 |

3. Appareil selon la revendication 1 ou 2, caractérisé par le fait que la roue à aubes (5) a un nombre impair d'aubes (6).

4. Appareil selon une des revendications 1 à 3, caractérisé par le fait que les centres de l'orifice d'entrée (7) du conduit d'entrée (1) de la chambre d'écoulement (3) et de l'orifice de sortie (8) du conduit de sortie (2) de la chambre d'écoulement (3) sont mutuellement espacés l'un de l'autre dans la direction périphérique d'environ 180° ou moins, de préférence d'une distance comprise entre 180° et 160°.

5. Appareil selon une des revendications 1 à 4, caractérisé par le fait que le conduit d'entrée (1) et le conduit de sortie (2) sont en communication d'écoulement avec des ouvertures (9, 10) aménagées dans des faces frontales (12, 13) mutuellement opposées du carter (4).

6. Appareil selon une des revendications 1 à 5, caractérisé par le fait qu'au moins le conduit d'entrée (1) débouche en biais par rapport à la direction radiale, de préférence sous un angle compris entre 10 et 80° par rapport à la direction radiale, dans la paroi extérieure (11) de la chambre d'écoulement (3).

7. Appareil selon une des revendications 1 à 6, caractérisé par le fait que le conduit de sortie (2) part en biais par rapport à la direction radiale, de préférence sous un angle compris entre 10° et X()° par rapport à la direction radiale, de la paroi extérieure (11) de la chambre d'écoulement (3).

8. Appareil selon une des revendications 1 à 7, caractérisé par le fait que les orifices (9, 10) du carter pour le conduit d'entrée (1) et/ou le conduit de sortie (2) sont centrés dans les parois frontales (12. 13) mutuellement opposées du carter (4).

9. Appareil selon une des revendications 1 à 8, caractérisé par le fait que la direction d'écoulement qui est déterminée par l'axe médian longitudinal (16) de l'orifice de buse (15), dans la position montée, par exemple vissée, de la buse-disque (14) est inclinée par rapport à la direction radiale, de préférence débouche sous un angle compris entre 10° et 80° par rapport à la direction radiale dans la surface périphérique (11) (imaginaire) de la chambre d'écoulement (3).

10. Appareil selon une des revendications 1 à 9, caractérisé par le fait que l'axe médian longitudinal (16) du conduit d'entrée (1) ou de l'orifice de buse (15) est dirigé sur les tronçons d'extrémité (17), situés radialement à l'extérieur des aubes (6), de la roue à aubes (5).

11. Appareil selon une des revendications 1 à 10, caractérisé par le fait que les aubes (6) de la roue à aubes (5) sont évidées.

12. Appareil selon une des revendications 1 à 11, caractérisé par le fait que les tronçons d'extrémité (17) situés radialement à l'extérieur des aubes (6) de la roue à aubes (5) sont disposés à une faible distance, dans tous les cas inférieure à 1 mm, de préférence inférieure à 0,5 mm, de la surface périphérique (11) de la chambre d'écoulement (3).

13. Appareil selon une des revendications 1 à 12, caractérisé par le fait que la roue à aubes (5) comporte un certain nombre d'aimants, de noyaux magnétiques ou d'éléments similaires générant des impulsions (18) mutuellement espacés dans la direction périphérique.

14. Appareil selon la revendication 13, caractérisé par le fait que les éléments générant des impulsions (18) sont disposés dans le voisinage de l'axe (19) de la roue à aubes (5).

15. Appareil selon la revendication 13 ou 14, caractérisé par le fait que les éléments générant des impulsions (18) sont regroupés dans un disque à secteurs (20) un élément générant des impulsions (18) étant disposé dans chaque secteur.

16. Appareil selon la revendication 15, caractérisé par le fait que le disque à secteurs (20) constitue une partie du moyeu (21) de la roue à aubes (5) ou est solidaire en rotation de celui-ci.

17. Appareil selon une des revendications 13 à 16, caractérisé par le fait que les éléments générant des impulsions (18) sont disposés dans le voisinage d'une paroi latérale plane (12) du carter (4).

18. Appareil selon une des revendications 1 à 17, caractérisé par le fait que la roue à aubes (5) est solidaire en rotation d'un arbre (21) qui est monté tournant dans les deux parois latérales planes (22,24) mutuellement en vis-à-vis du carter (4).

19. Appareil selon la revendication 18, caractérisé par le fait que le support de l'arbre (23) est formé d'un élément de palier (25) monté fixe dans la direction axiale dans l'une des parois latérales (22) et d'un élément de palier (26) monté réglable, de préférence depuis l'extérieur, dans la direction axiale dans l'autre paroi latérale (24).

20. Appareil selon une des revendications 1 à 19, caractérisé par le fait qu'au moins une des parois latérales planes (22, 24) du carter (4) est au moins partiellement formée d'un capot de carter (27, 28) fixé de manière amovible.

21. Appareil selon une des revendications 1 à 20, caractérisé par le fait qu'au moins une des parois latérales planes (22, 24) ou au moins un des capots de carter (27, 28) est en matériau transparent.

22. Appareil selon la revendications 20 ou 21, caractérisé par le fait que les capots (27, 28) pénètrent avec un rebord (51, 52) dans un évidement des parois latérales (22, 24) et que l'étanchéité à ce niveau est réalisée radialement au moyen d'un joint (53, 54).

23. Appareil selon une des revendications 1 à 22 avec des tubulures de raccordement (29, 30) pour le conduit d'entrée (1) et le conduit de sortie (2), caractérisé par le fait que les tubulures de raccordement (29, 30) sont montées étanches au moyen de joints d'étanchéité (33) avec un tronçon de tubulure (31, 32) dans un alésage non fileté du conduit d'entrée (1) ou du conduit de sortie (2) et par le fait que le tronçon de manchon (31, 32) présente une encoche (34) à fond de rainure arrondi en vis-à-vis de laquelle est située une encoche (36) correspondante de l'alésage non fileté, formé par une partie d'au moins un trou du carter (35) accessible de l'extérieur et par le fait qu'une goupille de freinage (37) par exemple sous la forme d'une vis sans tête est montée dans le trou du carter (35) concerné.

24. Appareil selon une des revendications 1 à 23, caractérisé par le fait que le carter (4) est monté dans un logement (38) du corps d'appareil (39).

25. Appareil selon la revendication 24, caractérisé par le fait que la forme extérieure du carter (4) est essentiellement parallélépipédique et, dans la position du carter (4) monté dans le corps d'appareil (39), les faces extérieures (40, 43) libres du carter (4) sont alignées avec les faces extérieures (44, 47) contiguës du corps d'appareil (39),

26. Appareil selon la revendication 24 ou 25, caractérisé par le fait que la face extérieure (40) de l'une des parois latérales planes (22) du carter (41) est alignée avec la face frontale extérieure (44) de corps d'appareil (39).

27. Appareil selon une des revendications 24 à 26, caractérisé par le fait que la carter (4) dans la position monté dans le corps d'appareil (39) est isolé thermiquement vis-à-vis du corps d'appareil (39).

28. Appareil selon une des revendications 24 à 27, caractérisé par le fait que la face extérieure frontale (44) du corps d'appareil (39) est équipée d'une plaque à échelle graduée (50) interchangeable.

29. Appareil selon une des revendications 24 à 28, caractérisé par le fait que le corps d'appareil (39) est conformé en tronçon d'un profilé extrudé creux.

30. Appareil selon une des revendications 24 à 29, caractérisé par le fait que les faces extérieures du corps d'appareil (39) sont profilées, par exemple sont pourvues de nervures ou de rainures.
